# EUROPEAN PATENT SPECIFICATION

(11) **EP 2 430 383 B1**
(45) Date of publication and mention of the grant of the patent: **05.10.2016**
(21) Application number: 11750135.3
(22) Date of filing: 01.03.2011
(51) Int. Cl.: C10J 3/20, C10J 3/40, C10B 7/00, F23H 7/00, F27D 3/12, F27D 3/16, F27D 15/02

(54) **A MODULE FOR USE WITH A LATERAL TRANSFER SYSTEM**
MODUL ZUR VERWENDUNG MIT EINEM SYSTEM ZUM LATERALTRANSPORT
MODULE UTILISABLE AVEC UN SYSTÈME DE TRANSFERT LATÉRAL

(30) Priority: 01.03.2010 US 309175 P
(43) Date of publication of application: 21.03.2012
(73) Proprietor: PlascoEnergy IP Holdings, S.L., Bilbao, Schaffhausen Branch, 88200 Schaffhausen (CH)
(72) Inventor: BACON, Marc, Stittsville Ontario K2S 2B7 (CA); TSANGARIS, Andreas, Ottawa Ontario K2C 4J3 (CA); GRAVELLE, Robert A., Cornwall Ontario K6J 5C8 (CA); FEASBY, Douglas Michael, Sherwood Park Alberta T8A 5K8 (CA)
(74) Representative: Clegg, Richard Ian
(86) International application number: PCT/CA2011/050124
(87) International publication number: WO 2011/106896

(56) References cited:
- WO-A2-2007/131241
- WO-A2-2007/131241
- CA-A1- 2 396 438
- US-A- 2 062 762
- US-A- 4 091 748
- US-A- 4 170 183
- US-A- 4 172 425
- US-A- 4 172 425
- US-A- 4 337 857
- US-A- 4 656 956
- US-A- 5 871 348
- US-A- 5 944 034
- US-A1- 2007 289 216

## Description

### FIELD OF THE INVENTION

This invention pertains to the field of a lateral transfer system and in particular, to a lateral transfer system for use with a gasifier, incinerator or other high temperature processing chamber.

### BACKGROUND OF THE INVENTION

Lateral transfer systems of high temperature processing chambers such as gasifiers, incinerators, or furnaces are exposed to high thermal stresses. Localized overheating of parts of the lateral transfer system increases corrosion and distortion and causes excessive wear of parts of the lateral transfer system necessitating extensive maintenance of the lateral transfer system. In some systems, overheating may be caused by exposure of parts of the lateral transfer system to the excessive heat and flame emitted during the oxidation of combustible material during the operation. Clogging of air inputs leads to reduced flow, increased back pressure and hampers the circulation of oxygen and therefore can result in a decrease in process efficiency. In addition, if air is used to cool the lateral transfer system clogging of air inputs leads to an increase in thermal stresses. If the air used to cool the system is preheated, the thermal stress is also increased. Maintenance necessitated by lateral transfer system corrosion and air input clogging not only increases the costs of operation but reduces operational time.

This background information is provided for the purpose of making known information believed by the applicant to be of possible relevance to the present invention. No admission is necessarily intended, nor should be construed, that any of the preceding information constitutes prior art against the present invention.

WO2007/131241 discloses a method and apparatus for the efficient conversion of carbonaceous feedstock including municipal solid waste into a product gas through gasification. A horizontally-oriented gasifier having one or more lateral transfer system for moving material through the gasifier is provided thereby allowing for the horizontal expansion of the gasification process such that there is sequential promotion of feedstock drying, volatization and char-to-ash conversions.

US4172425 discloses a controlled air incinerator having an increased capacity for burning waste material and having increased efficiency for completely burning all burnable waste material fed thereto. The controlled air incinerator, which is sometimes referred to as a "starved air" incinerator, requires accurate control of burning conditions so as to provide at all times a discharge of clean flue gases free from pollutants. In the present incinerator, means are provided for transferring the waste material therethrough while burning, the means causing the burning waste material to tumble within the combustion chamber and open up so as to expose to combustion air any unburned but burnable parts of the waste material whereby the oxygen of the combustion air will result in complete combustion.

US4656956 discloses a solid fuel furnace having an oscillating grate plate solid fuel burner therein wherein the grate plates are in a stepped arrangement and every other plate moves together, in an opposite direction from the adjacent plates so that the solid fuel is kept moving down the step grate positively. The solid fuel burner is mounted in a furnace housing which is designed to utilize the hot combustion gases to preheat incoming or makeup air for a blower used for supply air flow for heating. Baffles are used to provide a substantially elongated path for the combustion gases to ensure adequate heat exchange in a compact space.

US4170183 discloses a method and apparatus for incinerating combustible materials wherein the movement of the material particles is controlled as they are moved over an arrangement of grate sections during combustion in relation to particle density so that less dense particles travel faster than more dense particles to provide for increased combustion efficiency. The grate sections are arranged in adjacent groups and in an alined, downstepped succession. Each grate section has a downwardly inclined, upper support surface and a reciprocating pusher block is moved an adjustable distance over an inlet end portion of the upper support surface of each pusher block to impart moving forces through the material in a pushing stroke that is substantially shorter than the full travel distance of the material along the associated grate section. An adjustable speed, reversible drive is coupled to the pusher blocks so as to provide related, opposite, reciprocating movement of adjacent pusher blocks and related in-phase movement of a succession of alined pusher blocks. An escapement coupling between each pusher block and an associated grate section provides for limited reciprocating movement of each grate section, and opposite movement of adjacent grate sections in each group of adjacent grate sections causes a shearing of the material to prevent clinker buildup.

US4091748 discloses a solid municipal waste refuse which is pre-treated by partial burning in a moving grate hot carbonizer furnace and then further burned on a reciprocating step-grate stoker in the same furnace chamber. Limited amounts of air are fed to the waste through the grates to avoid the formation of hot spots in the burning material, thereby preventing the formation of clinkers and restricting the burning of volatile matter in the refuse. Hot low-Btu gas exhausted from the furnace chamber is burned in a boiler.

US2007/289216 discloses a vertically oriented gasifier comprising vertically successive processing regions for conversion of carbonaceous feedstock into gas. The gasifier comprises of: one or more processing chambers with two or more vertically successive processing regions being distributed within said one or more processing chambers, within each one of which a respective process selected from the group consisting of drying, volatilization and carbon conversion is at least partially favoured, The processing regions are identified by temperature ranges respectively enabling each said respective process. One or more additive input elements are associated with the processing regions for inputting additives to promote each said at least partially favoured process therein. In addition, the gasifier comprises one or more material displacement control modules adapted to control a vertical movement of the feedstock through said processing regions to enhance each said at least partially favoured process, one or more feedstock inputs located near a first of said processing regions and one or more gas outputs and one or more residue outputs.

US4337857 discloses a stepped grate-type cooler of the type employing a plurality of spaced grate plate carriers, alternate carriers being stationary and the carriers positioned between the stationary carriers being reciprocable relative thereto. Each of the grate plate carriers includes transversely extending carrier beams with carrier fingers extending therefrom. A plurality of grate plates is carried by each of the carrier fingers, and the clearance between the stationary carrier beam and a reciprocable carrier beam is greater than the width of each of the grate plates in a region extending from the mid position of the reciprocable carriers to either extreme end of the reciprocation travel of the carriers. With this type of structure, it is considerably more convenient to remove individual grate plates since this can be accomplished from the bottom rather than going through the hot gases in the cooler.

### SUMMARY OF THE INVENTION

The present invention provides a module as set out in claim 1. Further aspects of the present invention are set out in the remaining claims.

### DESCRIPTION OF THE DRAWINGS

Embodiments of the invention will now be described, by way of example only, by reference to the attached Figures, wherein:

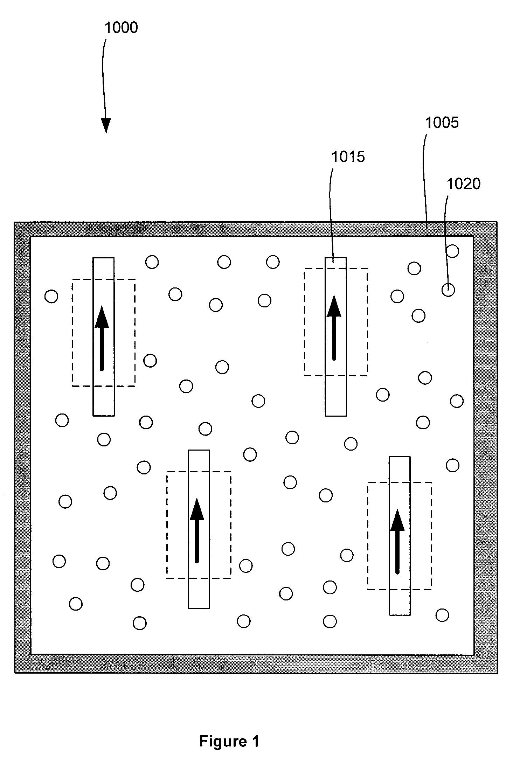

**Figure 1** illustrates a generic individual multi-functional lateral transfer and process additive cartridge (1000). The cartridge comprises a cartridge framework (1010) that provides the structure of the cartridge and support for the components therein, a lateral transfer system (1015) and one or more process additive systems (1020).
**Figure 2** illustrates a series of overlapping cartridges (2000) forming a stepped floor moving grate.
**Figure 3** is an alternative view of the moving grate of **Figure 2**.

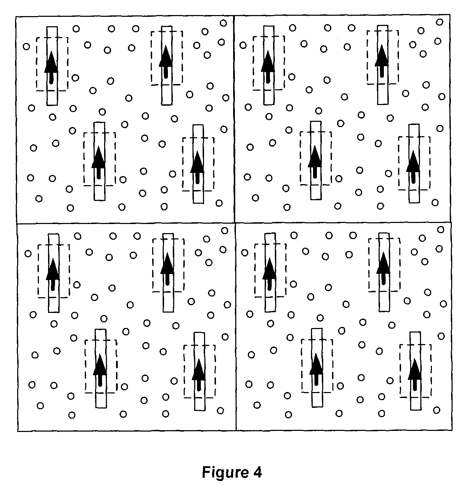

**Figure 4** illustrates a plurality of cartridges (1000) forming a flat grate.

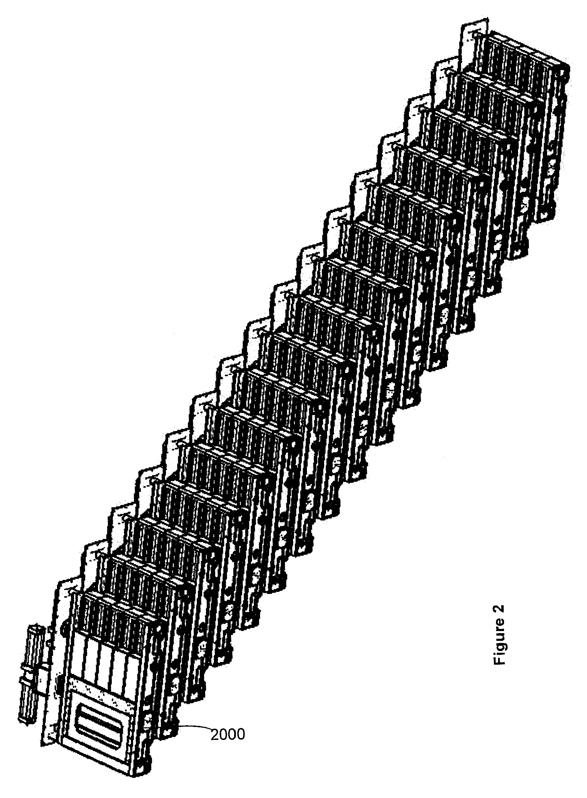

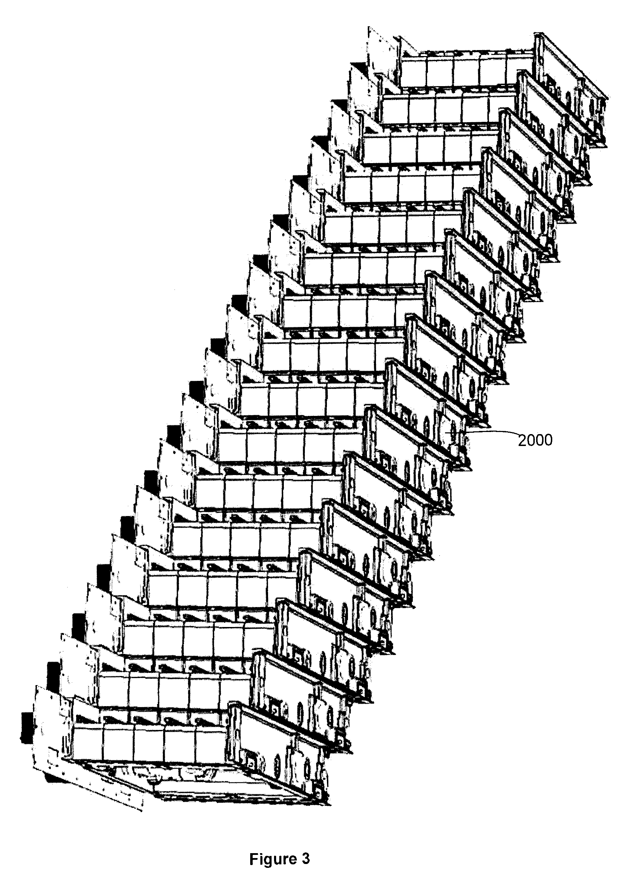

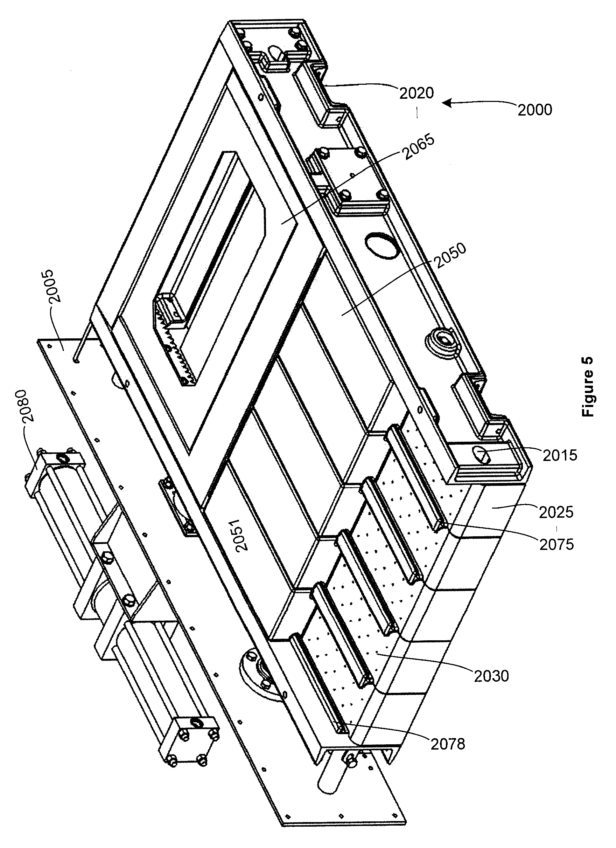

**Figure 5** illustrates one embodiment of the cartridge, which is the individual cartridge (2000) of the moving grate of **Figures 2** and **3**. A multi-piece cartridge framework (2010) provides the structure of the cartridge and support for components therein. The cartridge is attached to the wall of the primary processing unit via a connection plate (2005). The cartridge includes alignment guides (2015) to facilitate the correct insertion of the cartridge into the chamber wall and installation notches (2020) to allow for the insertion of tools to facilitate the insertion and removal of the cartridge. The air box of the cartridge is a composite of multiple smaller air boxes (2025) constructed from thick carbon steel with air holes (2030) in the top of each air box. The air is supplied to the individual air boxes via a single air manifold (2035) connected to an air pipe (2040) which connects to a hot air hook up flange (2045) in the connection plate. The lateral transfer components of the cartridge include a multiple-finger carrier ram (2050). The individual ram fingers comprise a groove configured to engage I-bar shaped (2075) or C-shaped engagement elements (2078) located between individual air boxes and the outside air boxes and the cartridge framework respectively.
**Figure 6** illustrates an alternative view of the individual cartridge of **Figure 5** showing air supply to the individual air boxes via a single air manifold (2035) connected to an air pipe (2040).
**Figure 7** illustrates an alternative view of the individual cartridge of **Figure 5**.
**Figure 8** illustrates an alternative view of the individual cartridge of **Figure 5**.
**Figure 9** illustrates alternative views of the individual cartridge of **Figure 5**.
**Figure 10** illustrates alternative views of the individual cartridge of **Figure 5**.
**Figure 11** illustrates alternative views of the individual cartridge of **Figure 5**.

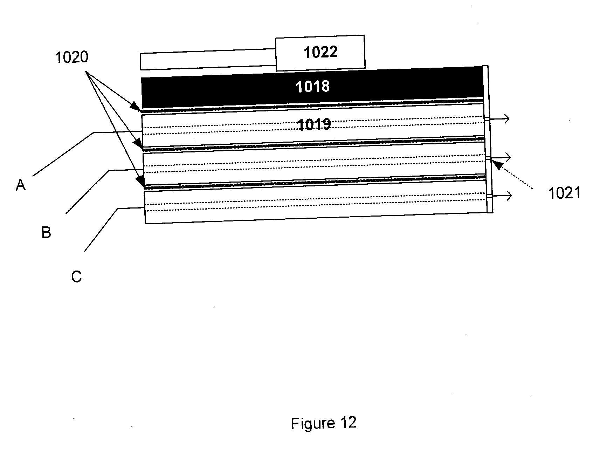

**Figure 12** is a schematic representation detailing one embodiment of a cartridge (in part) for a stepped floor processing unit. The cartridge includes alternating layers of thick metal (1019) and ceramic blank (1020) which form a step. Plenums for the introduction of air and/or steam are shown as perforated lines (A, B and C). Air is supplied to the plenums from a header space (not shown). Each plenum is equipped with a nozzle (1021). The step is covered by refractory (1018). Also shown is a reciprocating ram (1022). The drive elements of the cartridge are not shown.

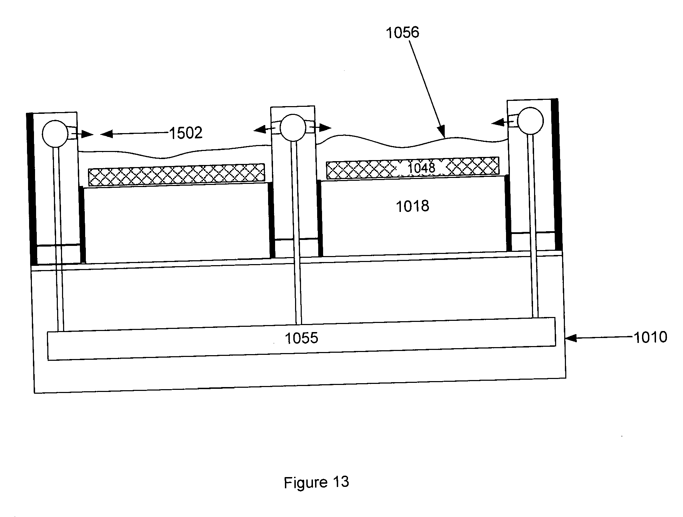

**Figure 13** illustrates one embodiment of the lateral transfer system and air injection cartridge. In this embodiment, air injection (1052) is raised slightly above the surface of the cartridge. The rams (1048) sit on refractory (1018) and are insulated from hot air introduction. Also shown is the air injection header (1055) and the top layer of the solid residue (1056). The drive elements of the cartridge are not shown. The cartridge framework (1010) is also shown. In some embodiments, air injection is replaced by alternative gas process additive injection.

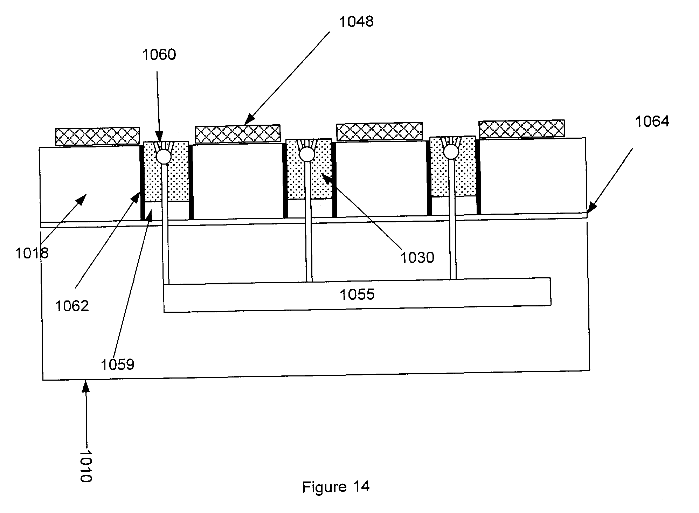

**Figure 14** illustrates one embodiment of the lateral transfer system and air injection cartridge. In this embodiment, to reduce warpage, the air boxes (1030) are constructed as separate, very heavy duty, solid pieces of steel which only inject hot air in areas where uninterrupted/ unhindered flow occurs. Air injection is raised slightly above the surface of the cartridge and is through air box holes (1060) with one or more jets, space permitting. The rams (1048) sit on refractory (1018). Between the air box and the refractory, packing insulation (1062) is provided. The air box is further provided with insulation (1059). Also shown are the air injection header (1055) and a seal (1064). The drive elements of the cartridge are not shown. The cartridge framework (1010) is also shown. In some embodiments, air injection is replaced by alternative gas process additive injection.

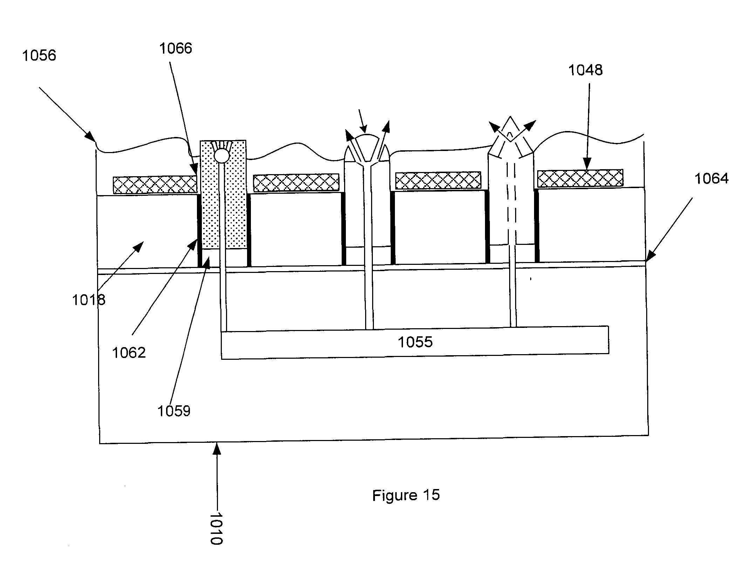

**Figure 15** illustrates various alternative air injection systems top designs. To reduce warpage, the air boxes are constructed as separate, very heavy duty, solid pieces of steel which only inject hot air in areas where uninterrupted/ unhindered flow occurs. Air injection is raised slightly above the surface of the cartridge and is through raised tops with one or more jets, space permitting. The rams (1048) sit on refractory (1018). Between the air box and the refractory, packing insulation (1062) is provided. The air box is further provided with insulation (1059). Also shown is the air injection header (1055), a seal (1064) and spacing (1066). The top of the reactant material is shown by line (1056). The drive elements of the cartridge are not shown. The cartridge framework (1010) is also shown. In some embodiments, air injection is replaced by alternative gas process additive injection.

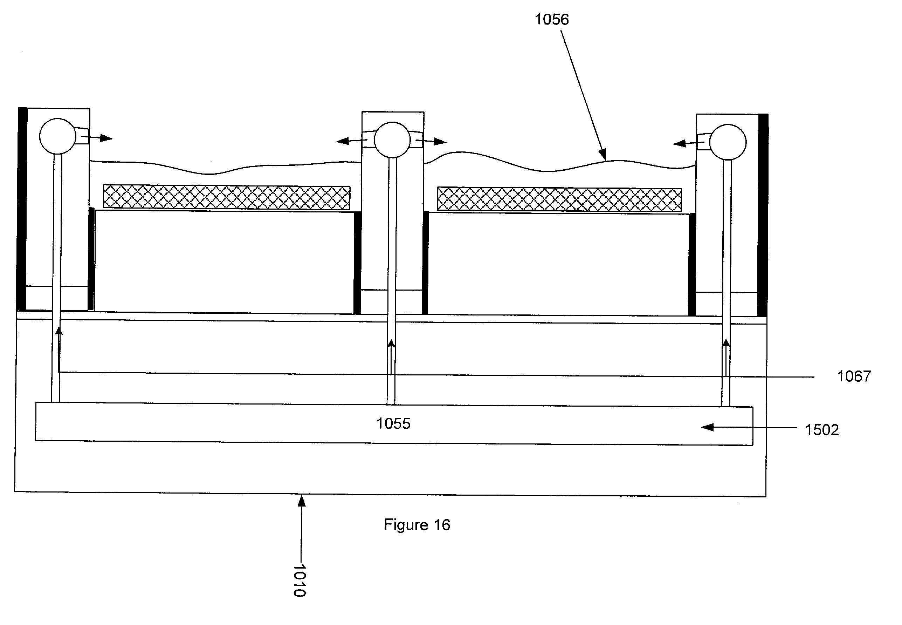

**Figure 16** illustrates one embodiment of the lateral transfer system and process additive injection cartridge detailing air (1502) and steam (1067) injection, and the air injection header (1055). In this embodiment, the steam is premixed with the air before it is injected into the bed. The top of the reactant material is shown by line (1056). The drive elements of the cartridge are not shown. The cartridge framework (1010) is also shown. In some embodiments, air injection and/or stem injection are replaced by alternative gas process additive injection.

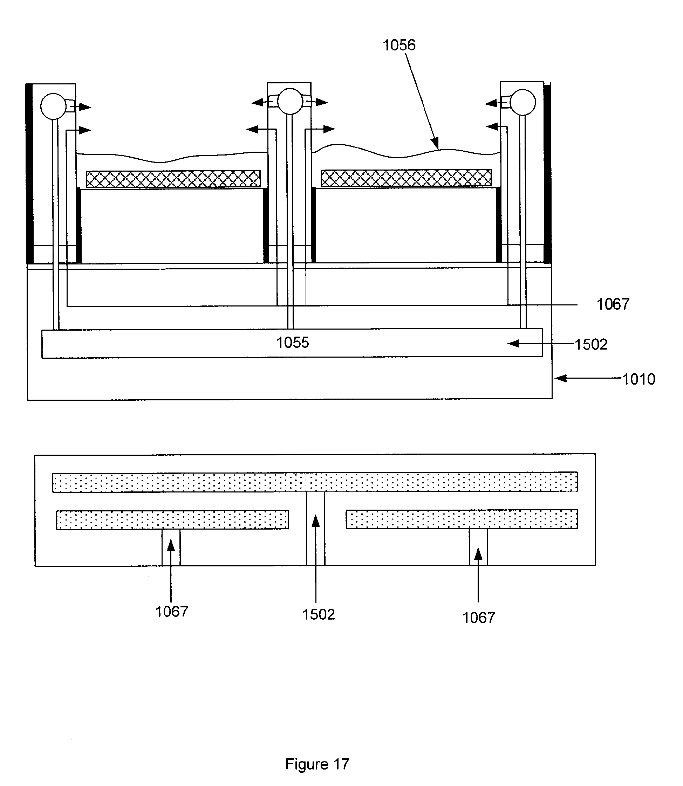

**Figure 17** illustrates one embodiment of the lateral transfer system and process additive injection cartridge detailing air (1502) and steam (1067) injection. In this embodiment, steam is piped in below the air to further buffer the rams from the hot zone. The top of the reactant material is shown by line (1056). The drive elements of the cartridge are not shown. The cartridge framework (1010) is also shown. In some embodiments, air injection and/or stem injection are replaced by alternative gas process additive injection.

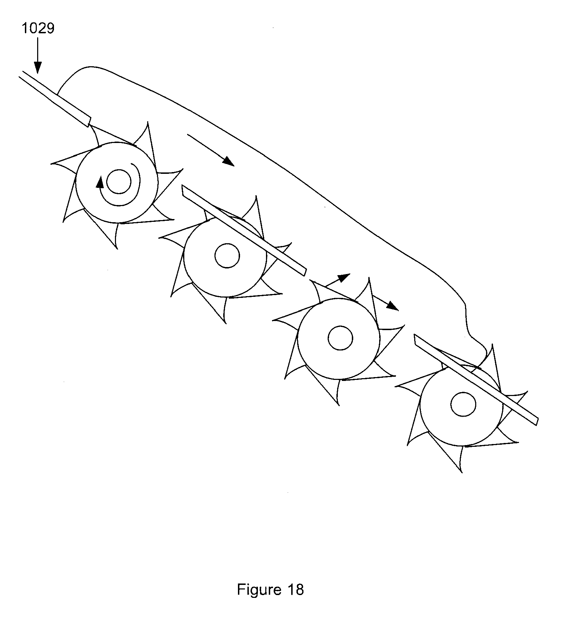

**Figure 18** is a side view of a lateral transfer system of one embodiment of the cartridge showing clockwise operation. The top of the cartridge is shown (1029).

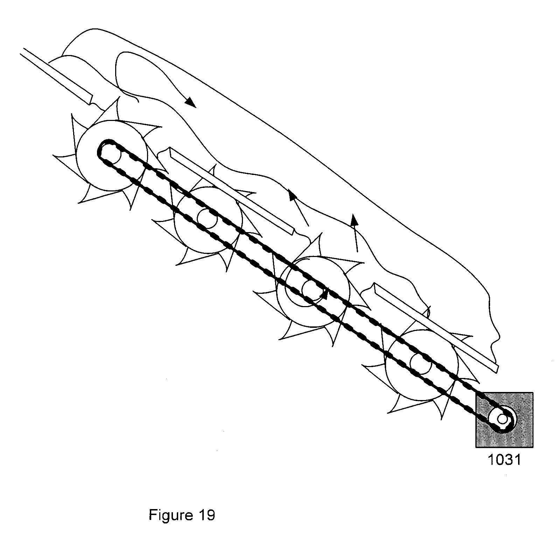

**Figure 19** is a side view of a lateral transfer system of one embodiment of the cartridge showing counterclockwise operation. Details of one embodiment of the drive system (1031) are shown.

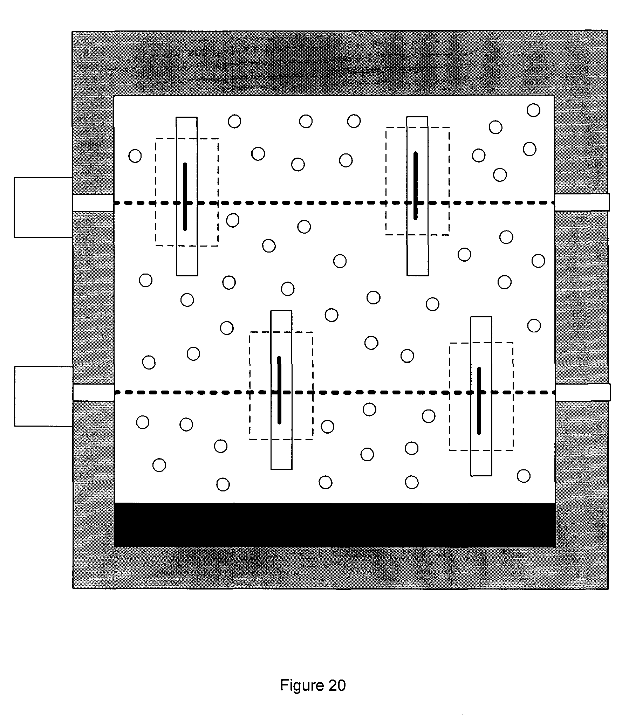

**Figure 20** shows a top view of a cartridge having the lateral transfer system shown in **Figures 18** and **19**.
**Figure 21** illustrates a horizontally oriented processing unit from the side, and detailing a bottom grate formed from a plurality of one embodiment of the cartridge and detailing the bottom grate positioning of each cartridge (2000).
**Figure 22** illustrates the horizontally oriented processing unit of **Figure 21** in an isometric view.
**Figure 23** illustrates a side view of the horizontally oriented processing unit of **Figure 21** where a cut along the viewing plane allows for internals, such as the moving grate system.
**Figure 24** illustrates a front view of the horizontally oriented primary processing unit of **Figure 21** with a cut to show the inside of the chamber.

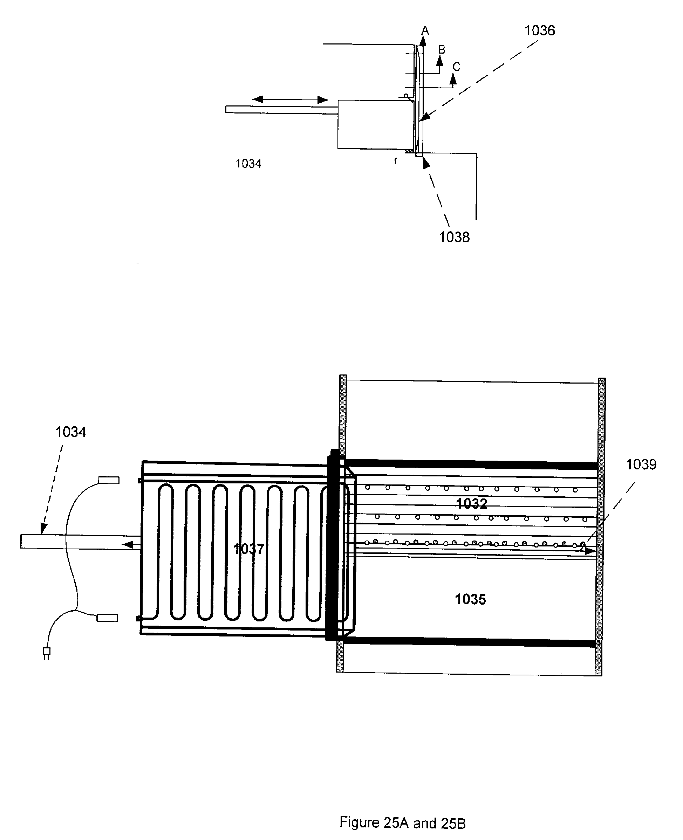

**Figures 25A** and **25B** illustrate one embodiment for a scraper system (1037) for dealing with potential clinker build up in the cartridge. **Figure 25A** shows the side view detailing process additive inputs A, B and C, a scrape guillotine (1036), a scraper slit in side wall (1038) and a hydraulically operated reciprocator (1034).
**Figure 25B** shows the top view and details the additives manifold (1032), a reciprocating ram (1035), and the scraper trajectory (1039). Optionally, the scraper (1037) is heated.
**Figure 26** is a schematic illustration of an incinerator with a plurality of one embodiment of the cartridges installed.
**Figures 27A** and **27B** illustrate an individual cartridge of **Figure 26****.**

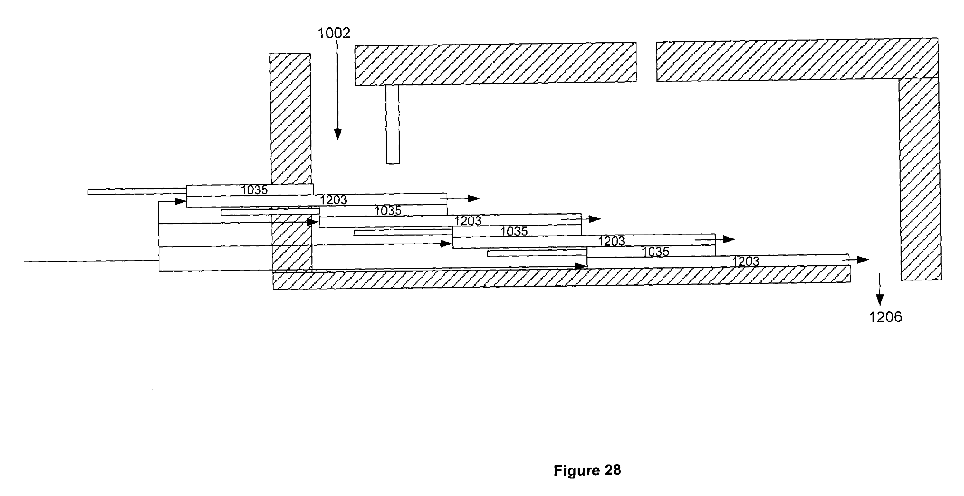

**Figure 28** illustrates a stepped continuous drying apparatus with a plurality of one embodiment of the cartridges installed detailing process additive input through an air box face plate.

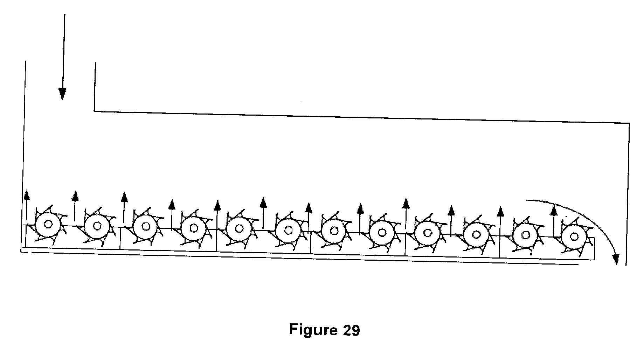

**Figure 29** illustrates a flat floor moving grate formed by a plurality of one embodiment of the cartridges.

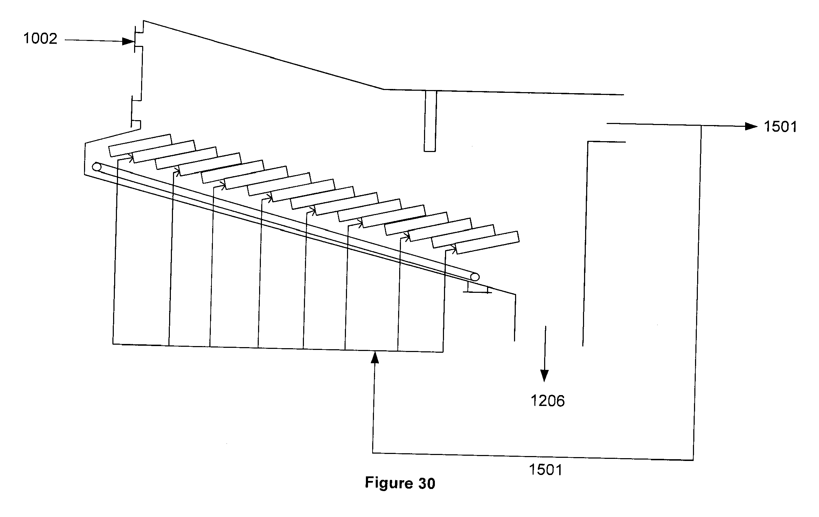

**Figure 30** is a schematic illustration of a gasifier with a plurality of one embodiment of the cartridges installed. Syngas (1501) is recycled back to the gasifier via the cartridges. Feedstock input (1002) and ash output (1202) are also shown.

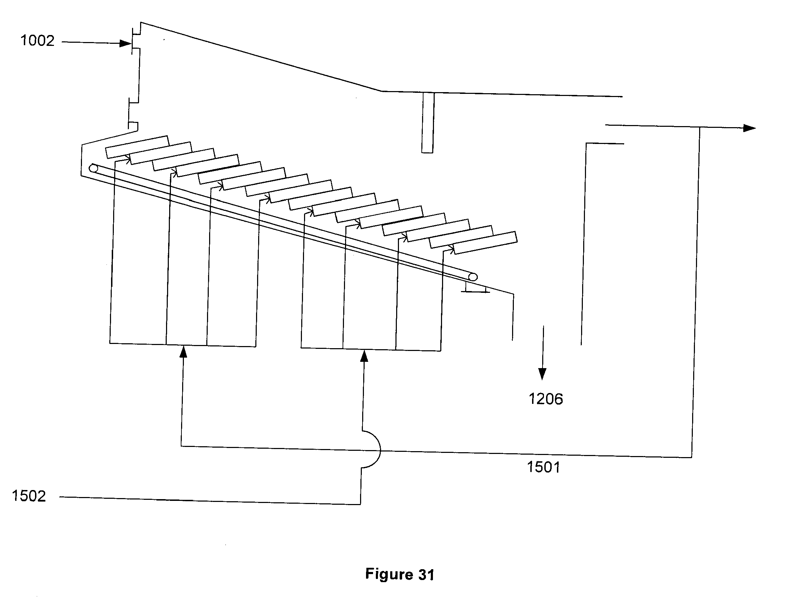

**Figure 31** is a schematic illustration of a gasifier with a plurality of one embodiment of the cartridges installed. Syngas (1501) is recycled back to a portion of the cartridges. Air (1502) is provided via the other cartridges. Feedstock input (1002) and ash output (1202) are also shown.

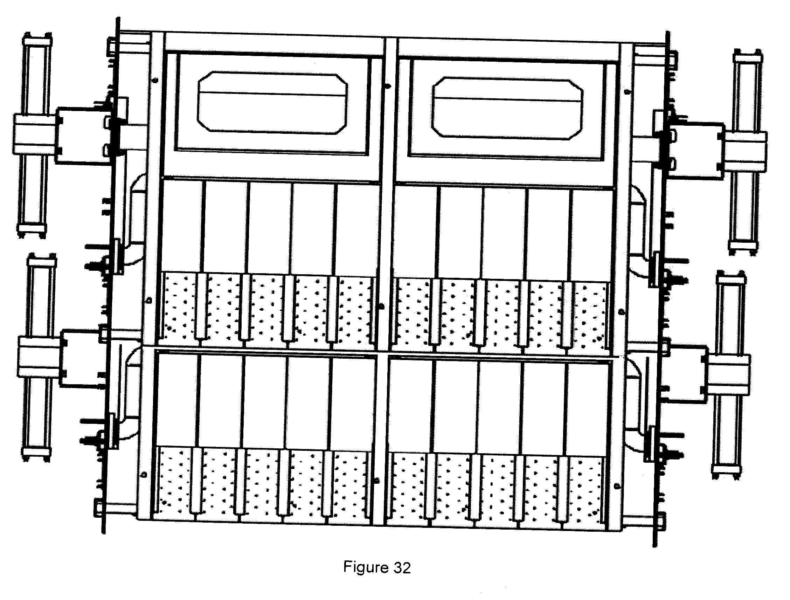

**Figure 32** illustrates a plurality of cartridges forming a moving grate.

### DETAILED DESCRIPTION OF THE INVENTION

### Overview of the System

This invention provides a modular lateral transfer system for use within a horizontally oriented processing chamber such as a gasifier, a dryer, an incinerator, a furnace, a pyrolyzer, a high temperature conveyor type system, a dry distillation apparatus or other reactant material state modification system. The modular lateral transfer system comprises one or more modules, wherein each module comprises the ability to deliver process gas in addition to moving the reactant material through the horizontally oriented processing chamber. The modular design enables the operator to remove and replace a module of the system, thereby substantially minimizing the downtime of the chamber required during servicing.

Each module is configured for interchangeability with the horizontally oriented processing chamber. Accordingly, the chamber comprises one or more insertion locations for positioning of a module, wherein associated with each of the insertion locations is an operative coupling system configured to provide the module with operative connection to systems and/or supplies that enable the module to perform its desired functionality. For example, the operative coupling system can include one or a combination of connections including a power supply connection, a process additive supply connection, an air supply connection, a steam supply connection, a control system connection, a syngas supply connection and the like. According to embodiments, each insertion location of a horizontally oriented processing chamber can be configured to provide a specific combination of connections, which may be dependent on the operation of the chamber and/or the module for insertion at that insertion location. In some embodiments, a complete set of connections is provided at an insertion location, and the use each of these connections can be dependent on the configuration of the module that is inserted into that specific insertion location.

As noted above, each module is configured to deliver process gas in addition to moving the reactant material through the horizontally oriented processing chamber. Accordingly, each module comprises a module lateral transfer system which is configured to move the reactant material from a first location to or towards a second location. Each module further comprises one or more module process gas supply systems, wherein a process gas supply system is configured to at least in part provide a process gas to the reactant material. For example, a process gas can be air, a process additive gas, steam, syngas or the like.

The module further comprises a module support system which is configured to support both the module lateral transfer system and the module process gas supply system. The support system can additionally comprise a mechanism for the interconnection with the horizontally oriented processing chamber to which the module is to be operatively connected. For example, the mechanism for interconnection can be configured based on structural shape, wherein the mechanism is configured to substantially mate with the configuration of the insertion location of the horizontally oriented processing system. In another example, the mechanism for interconnection can be configured to provide a locking or retention system which is configured to forcibly maintain the positioning of the module with respect to the insertion location, upon placement thereat.

According to some embodiments, upon insertion of a module into an insertion location of the horizontally oriented processing chamber, the module is substantially automatically interconnected to the operative coupling system associated with the chamber. For, example, the operative coupling system can be so configured such that there is a substantially automatic alignment of one or more of power, process gas supplies or others, upon insertion of the module. According to some embodiments, interconnection between a module and the operative coupling system of the chamber requires active coupling therebetween. For example, active coupling can be provided by the connection of mating pipes or electrical connections. In some embodiments, interconnection between a module and the operative coupling system the chamber is a combination of automatic and active coupling.

The module is configured for lateral transfer of reactant material within the chamber and the supply of air and/or other process additives.

The module is configured as a multi-functional cartridge specifically configured for insertion into the chamber wall. The cartridge is configured for rapid replacement and includes a system for the rapid connection of cartridge components to chamber or system components including for example, hot air supplies, process additive supplies, power supplies, control system, etc.

The module includes a module lateral transfer system and one or more process gas supply systems configured to supply air. In this embodiment the process gas supply system is configured as one or more air boxes. According to some embodiments, a module includes a module lateral transfer system and a process gas supply system configured to supply one or more process additives. According to some embodiments, a module includes a module lateral transfer system and a process gas supply system configured to supply one or more process additives and air.

According to embodiments, the wall of the horizontally oriented processing chamber is adapted to receive the individual modules at insertion locations configured as slots or openings being provided in the chamber wall for the insertion of the modules. According to embodiments, chambers in which more than one module is to be inserted can include multiple slots or openings. Optionally, individual slots or openings in the chamber wall may be configured to accept more than one module. In some embodiments, the chamber is configured such that adjacent cartridges are inserted from opposite sides of the chamber. According to some embodiments, should a slot or opening within the chamber wall not require the insertion of a module, a plug or other means of sealing that particular slot or slots in the chamber wall may be provided.

According to embodiments, upon installation the one or more modules form, at least part the floor of the processing chamber. According to embodiments, the floor of the processing chamber can be configured to be a substantially flat floor, a sloped floor, a stepped floor or a sloped stepped floor. According to some embodiments, wherein the floor is configured as a stepped floor, each of the modules is configured and oriented in order to provide a single step of the stepped floor.

In some embodiments, when installed, individual modules which are configured as cartridges and are covered, in part, by the cartridge above it, such that only a portion of an individual cartridge is exposed to the interior of the chamber. The slot in which the top most cartridge is inserted is specifically configured such that only a portion of the cartridge is exposed to the interior of the chamber. The cartridges, when installed, form a stepped floor and optionally form a sloped stepped floor to facilitate movement of reactant material while at least in part limiting unprocessed material from tumbling.

According to embodiments, sealing means may be provided between modules and/or between a module and the chamber, wherein the sealing means is configured to prevent egress of material and/or gases into and/or out of the processing chamber and/or between modules. According to some embodiments, a module can be sealed in place using high temperature sealant such as high temperature resistant silicone, temperature resistant gaskets or other suitable sealing device. According to some embodiments, the method of sealing the one or more modules is selected in order to enable ease of removal of a module and insertion of a new or repaired module.

According to some embodiments, a module is reversibly fixed in place by one or more of a variety of fasteners, for example bolts, screws. Optionally, a module can be held in a desired location within the wall of the chamber due to friction. According to some embodiments, an insertion location associated with the wall of the processing chamber can include one or more of insert / position alignment means, connection plates and seals.

According to some embodiments, a processing chamber can be configured to receive a single format of a module, or multiple different formats of a module. A module may be of varying sizes and configurations and may be specifically adapted for the intended use and/or position within the processing chamber and/or the configuration of the processing chamber itself.

The module is configured to provide lateral transfer of reactant material within the processing chamber and to supply air and/or one or more other process additives. The module further comprises a support framework or system configured to provide the structure of the module as well as support for both the lateral transfer system and the air and/or process additive supply system. The module may further comprise a sealing and/or connection system to facilitate the installation of the cartridge into the chamber walls and its securing in position and/or insulation elements.

According to embodiments, the support framework of the module may be constructed of a variety of materials including mild steel, high carbon steel, heat treated steel, an alloy or other material that will be at least in part resistant to the environment in which it is to operate. In addition, the support framework is configured to facilitate installation and removal by including notches or attachment sites for tools used in the installation and removal process.

In some embodiments, the lateral transfer system associated with the module is configured to move over the top of a base portion of the module. In this embodiment, air and/or process additives can enter at the base portion of the module or at the bottom of the pile of reactant material wherein the base portion of the module forms a portion of the process gas supply system. The process gas supply system therefore functions as both a process gas supply system and a reactant pile support or chamber floor with reactant material being moved across the surface of the process gas supply system exposed to the interior of the chamber (i.e. the supply surface) by the lateral transfer system. According to embodiments, the process gas supply surface is the top surface of the process gas supply system, the supply surface of the process gas may be a side surface, end surface, sloping end surface or the like. According to embodiments, the configuration of the process gas supply system is, at least in part, dictated by the configuration of the lateral transfer system of the module.

The individual cartridge comprises both support/connection elements and functional elements. The support/connection elements include the module structure and one or more connection plates specifically configured for sealing connection to the shell of the processing chamber. Refractory may be provided between the module structure and connection plate to reduce heat loss and heat transfer to the connection plate. Once inserted, the module may be secured using appropriate fasteners. The module structure includes alignment guides to facilitate the correct insertion of the module into the chamber wall and notches to allow for the insertion of tools to facilitate the insertion and removal of the module.

### LATERAL TRANSFER SYSTEM OF A MODULE:

Each module comprises a module lateral transfer system which is configured to move the reactant material from a first location to or towards a second location. According to embodiments, the module lateral transfer system comprises one or more moving elements and one or more driving elements. The lateral transfer system optional includes guiding or alignment elements which can provide for the guiding of the movement of the one or more moving elements. According to some embodiments, the module lateral transfer system further includes two or more guide engagement elements which are configured to mesh with the guide elements, and provide a substantially movable interconnection therebetween, thereby facilitating retention of the one or more moving elements in a desired orientation while enabling the desired degree of movement thereof.

In some embodiments, the lateral transfer system and the process gas supply system is configured such that the one or more moving elements of the lateral transfer system moves across the supply surface of the process gas supply system. In such embodiments, the one or more moving elements can include, but is not limited to, a shelf / platform, pusher ram, carrier ram, plow or the like. According to some embodiments, the one or more moving elements can be configured as a single ram or a multiple-finger ram.

In some embodiments the moving elements are configured as rams, and furthermore configured as short rams which can are configured to be fully retracted with each stroke. In some embodiments, which include one or more moving elements configured as a multiple-finger ram design, the multiple-finger ram may be a unitary structure or a structure in which the ram fingers are attached to a ram body, with individual ram fingers optionally being of different widths depending on location.

In some embodiments, which include a moving element configured as a multiple-finger ram, there is a separation space between each of the multiple finger of the multiple finger ram. This separation space can be configured in order to allow for expansion of the respective multiple fingers during operation of the processing chamber. For, example, the separation space may be determined at least in part based on the maximum operating temperature of the processing chamber.

According to some embodiments, a moving element is configured as a "T-shaped" moving element.

In some embodiments, the lateral transfer system and the process gas supply system of a module is configured such that the moving element is inserted or embedded within the supply surface of the process gas supply system. In such embodiments, the one or more moving elements can be configured as, but not limited to, a screw element, one or more wheel elements, a conveyor element or the like.

According to embodiments, the one or more moving elements are constructed of material suitable for use at high temperature. Such materials are well-known to those skilled in the art and can include stainless steel, mild steel, or mild steel partially protected with or fully protected with refractory or the like. The one or more moving elements may optionally be of a cast or solid construction. Optionally the one or more moving elements are sized and/or configured to ensure any sized or shaped agglomeration is effectively moved. For example, as the reactant material changes in shape and/or properties, the one or more moving elements are configured to move the reactant material regardless of these changes.

According to embodiments, the module lateral transfer system includes one or more guide elements which are positioned such that they are exposed to the interior of the chamber. In some embodiments, the one or more guiding elements are positioned such that they are at least in part isolated from the interior of the processing chamber.

In embodiments in which the guide elements are exposed to the interior of the chamber, the lateral transfer system can be designed to prevent jamming or debris entrapment. According to some embodiments a guide element can be configured as one or more guide channels located in the side walls of the cartridge, one or more guide tracks or one or more rails, one or more guide troughs, one or more guide chains or the like.

According to some embodiments, the module lateral transfer system includes one or more guide engagement members which are configured to movably engage with one or more of the guide elements. The one or more guide engagement members optionally include one or more wheels or rollers sized to movably engage the guide element. In some embodiments, the guide engagement member is a sliding member comprising a shoe adapted to slide along the length of a guide track.

In some embodiments, the one or more guide engagement elements can be integral to or integrally formed with a moving element. For example, the surface of a moving element may be specifically adapted to engage with one or more of the one or more guide elements. In some embodiments, the supply surface of the process gas supply system includes tracks and the one or more moving elements in contact with the supply surface are specifically shaped to engage the tracks.

According to embodiments, the lateral transfer system of a module includes a multiple-finger carrier ram, engagement elements and drive system. Individual ram fingers are attached to a ram body via pins or shoulder bolts, which are configured to substantially not tighten on the individual finger. The ram body is connected to a drive engagement plate that includes parallel racks for operative engagement with a pinion for movement thereof. In some embodiments, the individual ram fingers are configured to engage a T, C or I-bar shaped engagement element which holds the ram fingers in proximity to the surface of the air box such that the rams substantially scrape the air box surface during back and forth movement thereby aiding in avoiding clinker build up.

According to some embodiments, the end of a ram finger is bent down to ensure that the tip contacts the top of the air box in the event that the relative locations of the ram and air box change due, for example, to thermal expansion or contraction of one or more components. This configuration of a ram finger may also lessen detrimental effects on the process due to air holes being covered by the ram, the air will continue to flow through the gap between the ram and air box.

According to embodiments, each of the modules include the drive components necessary to effect movement of the one or more moving elements associated with the module lateral transfer system. For example a drive component can include a chain drive, sprocket drives, rack and pinion drive or other drive component configuration as would be readily understood. According to some embodiments, the drive component further comprises one or more actuators, pumps electrical motors or other mechanism used to operate the drive component. According to some embodiments, the provision of operative power for the respective drive component is provided by the processing chamber itself, wherein this required operative power can be enable upon operative interconnection of the module with the processing chamber. Optionally, in a configuration which includes multiple modules, operative power for the each of the module lateral transfer systems can be provided by one or more selected modules. In this manner, the there may be a reduction in costs associated with some of the modules as the operative component does not have to be integrated therein.

According to embodiments, power for moving the one or more moving elements is provided by a hydraulic piston. For example, power to propel the one or more moving elements is supplied by a hydraulic piston which drives one or more pinions on a shaft via a rotary actuator selectable in the forward or reverse direction allowing for extension and retraction of the one or more moving elements at a desired rate. In some embodiments, two pinions are used and engage respective parallel racks operatively connected to the one or more moving elements. According to some embodiments, position sensors can be positioned to detect and transmit position information regarding the one or more moving elements to an operatively connected control system.

### PROCESS GAS SUPPLY SYSTEM OF A MODULE

Each module comprises one or more module process gas supply systems, wherein a process gas supply system is configured to at least in part provide a process gas to the reactant material. For example, a process gas can be air, a process additive gas, steam, syngas or the like.

According to embodiments, process gas is provided to the interior of the processing chamber through or at the supply surface associated with the module. The process gas supply system may be configured to provide air only or a combination of air and/or one or more process additives either through shared inlets or dedicated inlets.

According to embodiments, the process gas supply system comprises a delivery system, wherein the delivery system may be configured to provide a distributed supply or a more focused supply of air and/or one or more process additives. For example a distributed supply configuration can include a supply surface which is perforated or comprises a series of holes. A more focused supply of air and/or one or more process additives may be provided by the use one or more nozzles. In some embodiments, the injection of air and/or one or more process additives is provided at a location which is raised slightly above the supply surface. This positioning of the provision of the air and/or one or more process additives can be provided by the use of raised inputs.

In some embodiments, the supply surface associated with the process gas supply system includes a plurality of perforations. According to some embodiments, the number of perforations can be optimized to provide additives and/or heat circulation throughout the reactant material.

In some embodiments, the air supply to a single module may be independently controlled or the air pipes to two or more modules may be connected to a single manifold such that the air supply to the two or more modules is dependently controlled.

In some embodiments wherein the process gas supply system includes one or more nozzles, the nozzles can be configured as low, medium or high flow nozzles. This can be enabled by varying nozzle diameters and can allow for low, medium or high penetration of the process gas being supplied. This configuration of the process gas supply system can be configured to cover the reactant material location are more uniformly.

In some embodiments, hole patterns associated with the process gas supply system are arranged such that operation of the lateral transfer unit does interfere with the process gas passing through the holes. In some embodiments, the pattern of holes facilitates the even distribution of one or more process additives or air over a large surface area with minimal disruption or resistance to lateral material transfer.

In embodiments wherein a multiple-finger ram is used as the moving element, the pattern of the holes is configured such that when heated the holes are between the fingers (in the gaps). In some embodiments, the holes can be configured in an arrow pattern with an offset to each other. In some embodiments, the hole pattern can also be hybrid where some holes are not covered and others are covered, such that even distribution of process gas is substantially maximized (i.e. areas of floor with substantially no process gas input at all are substantially minimized).

In some embodiments, the process gas inputs provide diffuse, low velocity input of process gas. In some embodiment, diffuse, low velocity input is provided for the process additives.

In some embodiments, the process gas supply system further comprises air boxes, manifolds and piping as necessary. In some embodiments, hot air is provided through air boxes. Optionally, the air boxes are cast and moulded unitary inserts. The functional elements include one or more air box components and one or more lateral transfer components.

In some embodiments, the air box component may include multiple smaller air boxes or a single large air box. Optionally the air boxes are specifically configured to reduce distortion, to reduce the risk of stress-related failure or buckling of the air box. In some embodiments, the individual air boxes are constructed from thick carbon steel. In some embodiments, to reduce warpage the air boxes may be constructed as separate, very heavy duty, solid pieces of steel which only inject hot air in areas where uninterrupted/ unhindered flow occurs.

In some embodiments, the material for the perforated top plate of the air boxes is an alloy that meets the corrosion resistance requirements for the overall system. If the perforated top sheet is relatively thin stiffening ribs and structural support members to prevent bending or buckling may be provided, for example.

In some embodiments, air enters the processing chamber at the bottom of the pile of reactant material through air holes or perforations in the top of each air box. If the individual modules include multiple air boxes, air may be supplied to the individual air boxes via a single air manifold connected to an air pipe which connects to a hot air hook up flange in the connection plate. A hot air hook up flange is optionally adapted to facilitate rapid connection to a hot air supply.

In some embodiments, in order to avoid blockage of the air holes during processing, air hole size in the perforated tops of the air boxes is selected such that it creates a restriction and thus a pressure drop across each hole. This pressure drop can be sufficient to prevent particles from entering the holes. The holes can be tapered outwards towards the upper face to preclude particles becoming stuck in a hole. In addition, the movement of the lateral transfer units may dislodge any material blocking the holes.

### APPLICATIONS

The cartridge is configurable for use in a variety of high temperature chamber where lateral conveyance of material is required including furnaces, gasifier, incinerators, dryers, pyrolyzers, high temperature conveyor systems, and among others.

Generally, a plurality of cartridges would be mounted in an optionally refractory-lined chamber to form a moving grate. The chamber includes one or more inlets configured to input material, an exhaust or gas outlet, and a processed material outlet or removal system.

In one embodiment, the cartridge is configured for use in a gasifier. The gasifier may be generally horizontally oriented and is configured to convert carbonaceous feedstock to syngas and a solid reside.

In one embodiment, the cartridge is configured for use in an integrated multi-fuel gasifier, for example, as disclosed in European Patent Application No. 1 696 177. In such an embodiment, the cartridge would replace the drying syngas and pusher, recirculated syngas and pusher, and air and pusher.

In one embodiment, the cartridge is configured for use in an incinerator.

In one embodiment, the cartridge is configured for use in a starved air incinerator.

In one embodiment, the cartridge is configured for use in a step stoker incinerator.

In one embodiment the cartridge is configured for use in a dry distillation apparatus.

In one embodiment the cartridge is configured for use in a semi-continuous dry distillation apparatus as disclosed in KR20050025290.

In one embodiment the cartridge is configured for use in an incinerator as disclosed in U.S. Patent No. 4,172,425. In particular, the cartridge would replace the ram and air supply of the disclosed incinerator.

In one embodiment, the cartridge is configured for use in an apparatus configured to recycle oil laden waste as disclosed in U.S. Patent No. 5,944,034. In particular, the cartridge is configured for use in a chamber designed to lower the viscosity of the oil so it will drain from the products, and volatize (but not burn) the oil into a vapor which then carried to the oil condensing or reclamation chamber. The cartridges would be optionally configured with collection grooves to direct oil flow to a collection point and/or drainage conduits.

In one embodiment, the cartridge is configured for use in a drying apparatus.

### EXAMPLES:

### CARTRIDGE FOR USE WITH A HORIZONTALLY-ORIENTED GASIFIER

In one embodiment, the cartridge is configured for insertion into a horizontally-oriented gasifier. When installed, the plurality of cartridges forms the stepped moving grate of the gasifier. Individual floor levels correspond to a combined lateral transfer and air input cartridge such that a plurality of these cartridge (2000) form the moving grate.

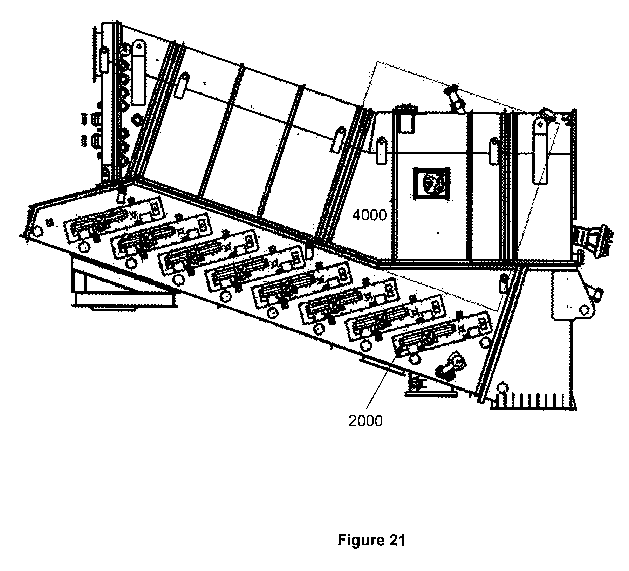

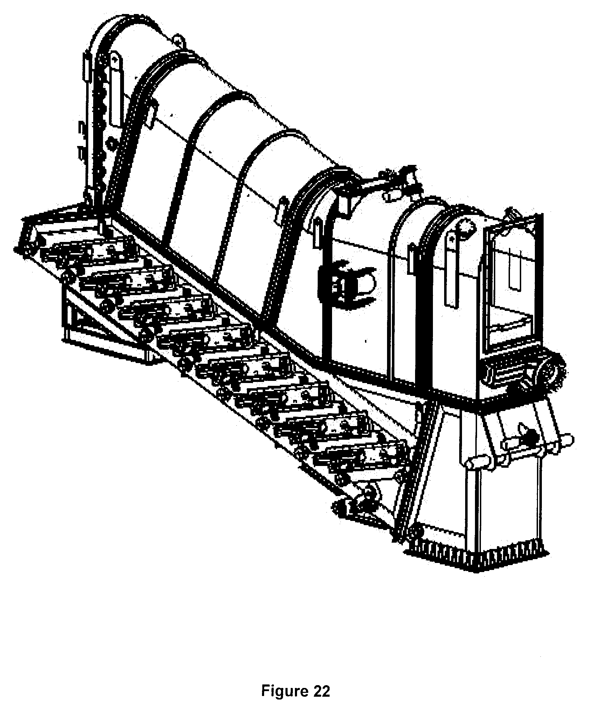

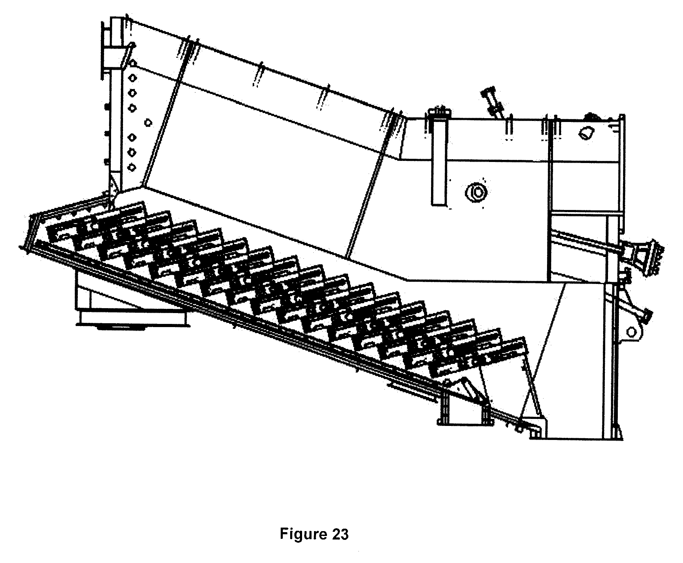

Referring to Figures 21 to 24, there is provided a horizontally oriented gasifier (4000) (shown in part), comprising a horizontally-oriented refractory lined chamber having a feedstock input, gas outlet, a solid residue outlet, and various service and access ports. The gasification chamber has a stepped floor with a plurality of floor levels. Each individual cartridge (2000) corresponds to an individual step and is oriented in the chamber such that the floor level is sloped to facilitate movement of reactant material through the gasifier without tumbling of unprocessed feedstock.

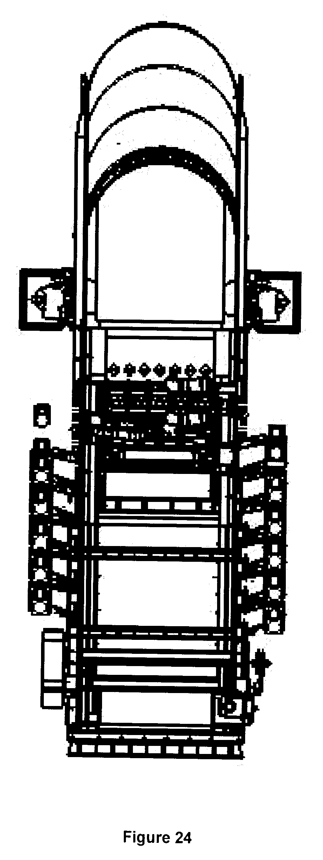

The side walls of the gasifier are provided with opening for the insertion of the individual cartridges. Adjacent cartridges are inserted from opposite sides of the unit (see Figure 24). When installed, individual cartridges are covered, in part, by the cartridge above it, such that only a portion of an individual cartridge is exposed to the interior of the unit.

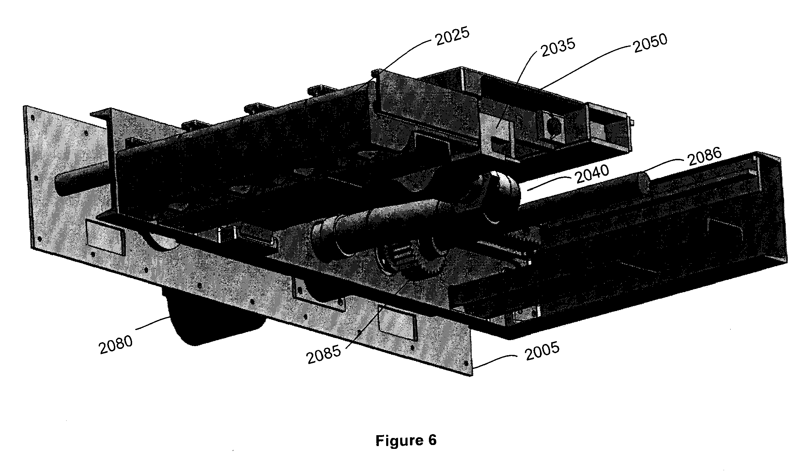

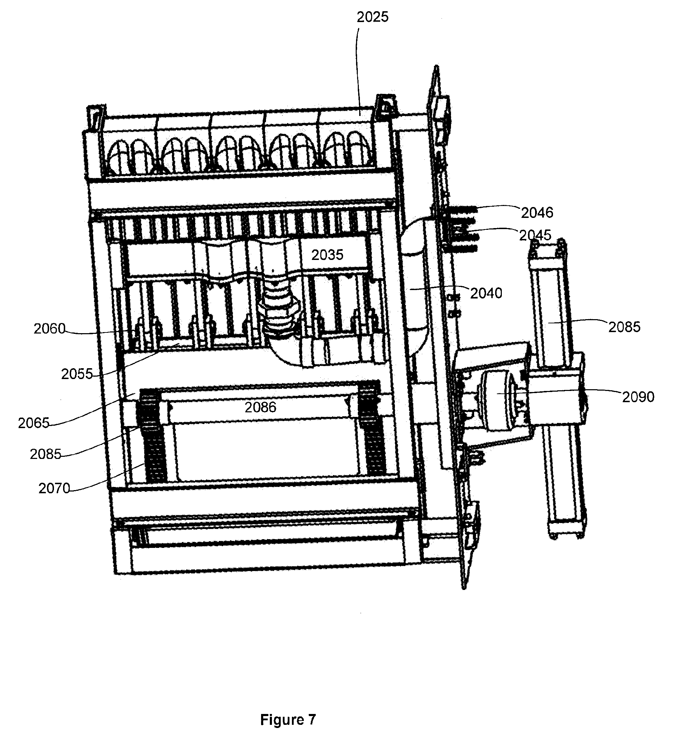

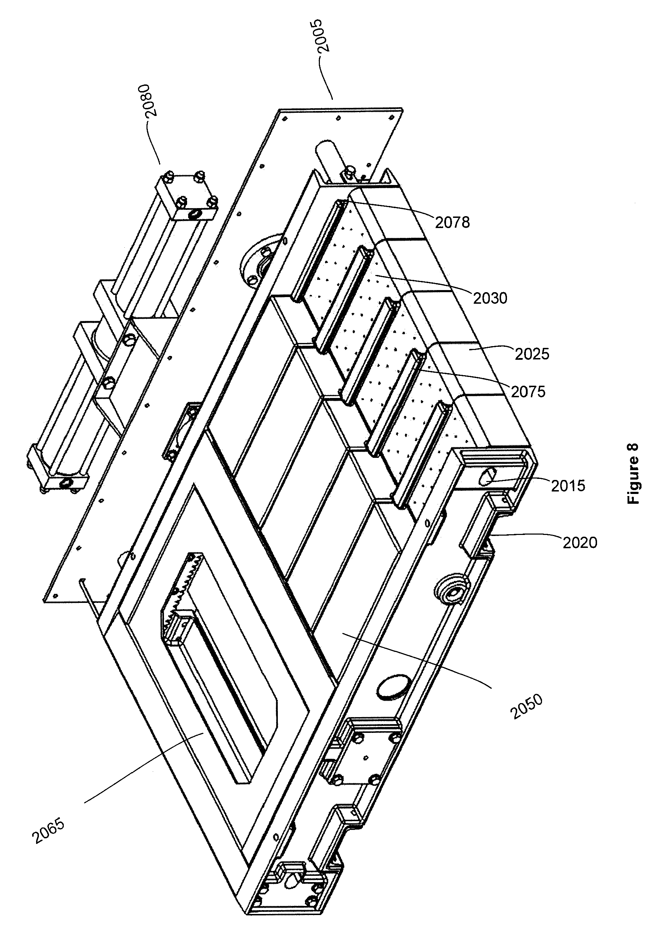

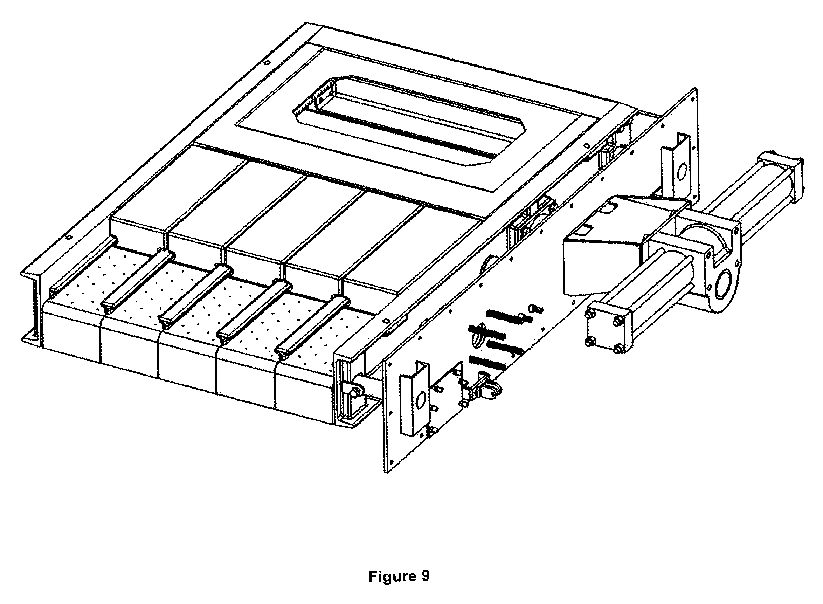

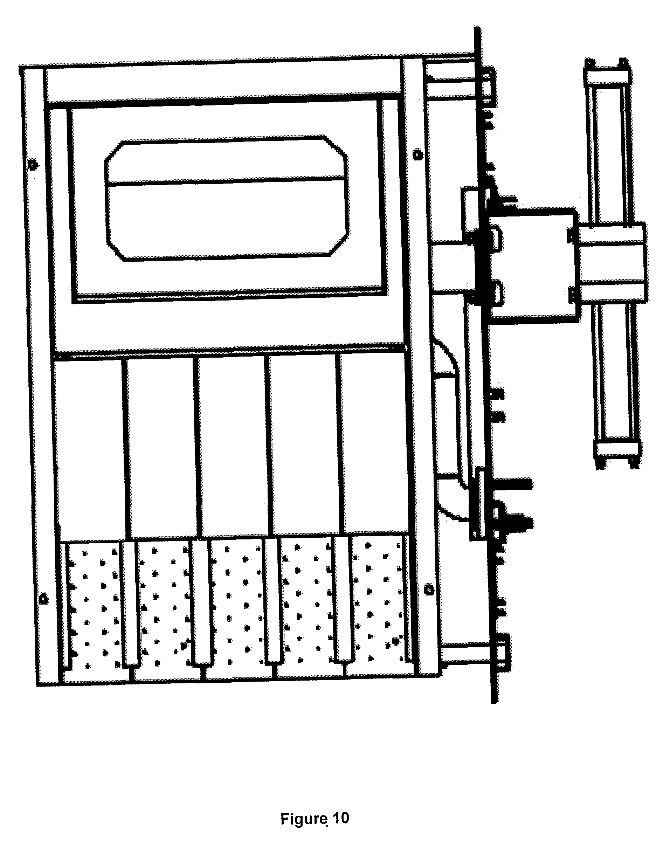

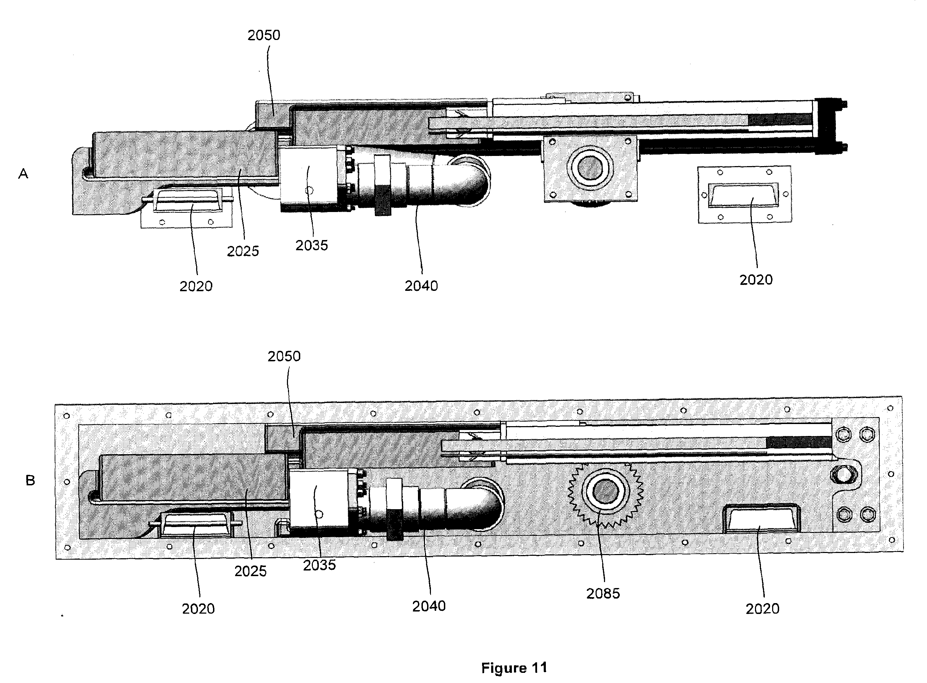

Referring to Figures 2, 3 and 21 to 24, a series of individual cartridges in situ forms a moving grate (4002). An individual cartridge (2000) comprises both support/connection elements and functional elements. Referring to Figures 5 to 11, the support/connection elements include the cartridge framework (2010) and connection plate (2005) specifically configured for sealing connection to the shell of the primary processing unit. Refractory (not shown) is provided between the cartridge structure and connection plate (2005) to reduce heat loss and heat transfer to the connection plate. Once inserted, the cartridges are secured using appropriate fasteners. The cartridge includes alignment guides (2015) to facilitate the correct insertion of the cartridge into the chamber wall and installation notches (2020) to allow for the insertion of tools to facilitate the insertion and removal of the cartridge from the primary processing unit.

The functional elements of the cartridge include air box components and lateral transfer components. The air box of the cartridge is a composite of multiple smaller air boxes (2025) constructed from thick carbon steel.

Air enters the gasifier at the bottom of the pile of reactant material through air holes (2030) or perforations in the top of each air box (2025). The air is supplied to the individual air boxes via a single air manifold (2035) connected to an air pipe (2040) which connects to a hot air hook up flange (2045) in the connection plate. The connection plate further includes inputs for thermocouples (2046).

The lateral transfer components of the cartridge include a multiple-finger carrier ram (2050), engagement elements and drive system. Individual ram fingers (2051) are attached to a ram body (2055) via pins or shoulder bolts (2060), which do not tighten on the individual finger. The ram body is connected to a drive engagement plate (2065) that includes two parallel racks (2070).

The individual ram fingers (2051) comprise a groove configured to engage an I-bar shaped (2075) or C-shaped engagement elements (2078) located between individual air boxes and the outside air boxes and the cartridge framework respectively. The engagement elements which hold the rams in proximity to the surface of the air box such that the rams scrape the air box surface during back and forth movement thereby avoiding clinker build up.

Power for moving the multiple-finger ram is provided by a hydraulic piston (2080). Briefly, in the illustrated embodiment, power to propel the ram is supplied by a hydraulic piston (2080) which drives two pinions (2085) on a shaft (2086) via a rotary actuator (2090) selectably in the forward or reverse direction allowing for extension and retraction of the rams at a controlled rate. Position sensors transmit ram position information to the control system. Two pinions (2085) engage parallel racks (2070) on the drive engagement plate (2065).

### CARTRIDGE FOR USE WITH A STROKER INCINERATOR

In one embodiment, the cartridge is configured for insertion into an incinerator thereby providing a reciprocating type of stoker suitable for use in municipal, industrial and commercial incinerators which is operative to tumble refuse deposited thereon to enhance the combustion process as the refuse transits the length of the stoker.

In one embodiment, the incinerator comprises an elongated casing defining a generally horizontal combustion chamber. Slots are provided in along both sides of the casing for the insertion of individual cartridges. When installed, individual cartridges are covered, in part, by the cartridge above it, such that only a portion of an individual cartridge is exposed to the interior of the unit.

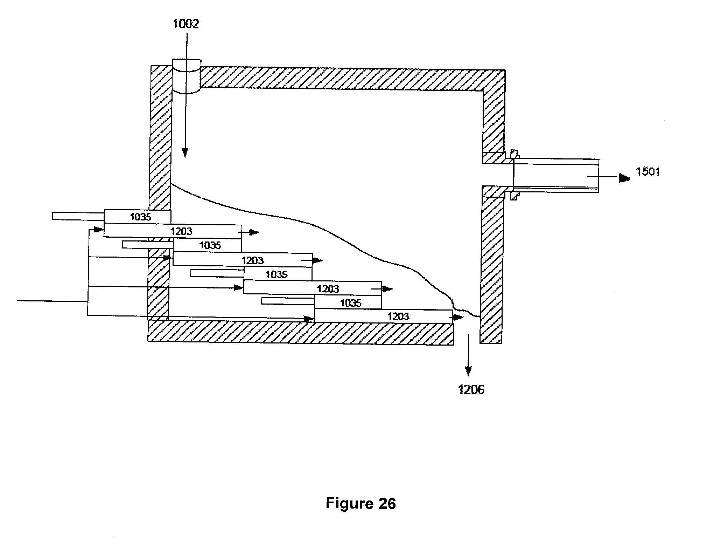

Referring to Figure 26, the combustion chamber includes an inlet (1002) for waste material, an outlet for ash (1206), optionally equipped with an ash extractor screw, exhaust (1501) and optional burner port (1273). The individual cartridges in situ form a stepped floor and each step optionally defines a separate burning area for waste material at a different elevation.

Each cartridge includes a reciprocating ram (1035) having a pusher wall defining a portion of the riser when in a retracted position. The ram is that is movable across the surface of the cartridge exposed to the interior of the chamber to an extended position to move burning waste material thereon further towards the outlet end of the combustion chamber. Air injection is through nozzles or perforations in the face plate of the cartridge (2207).

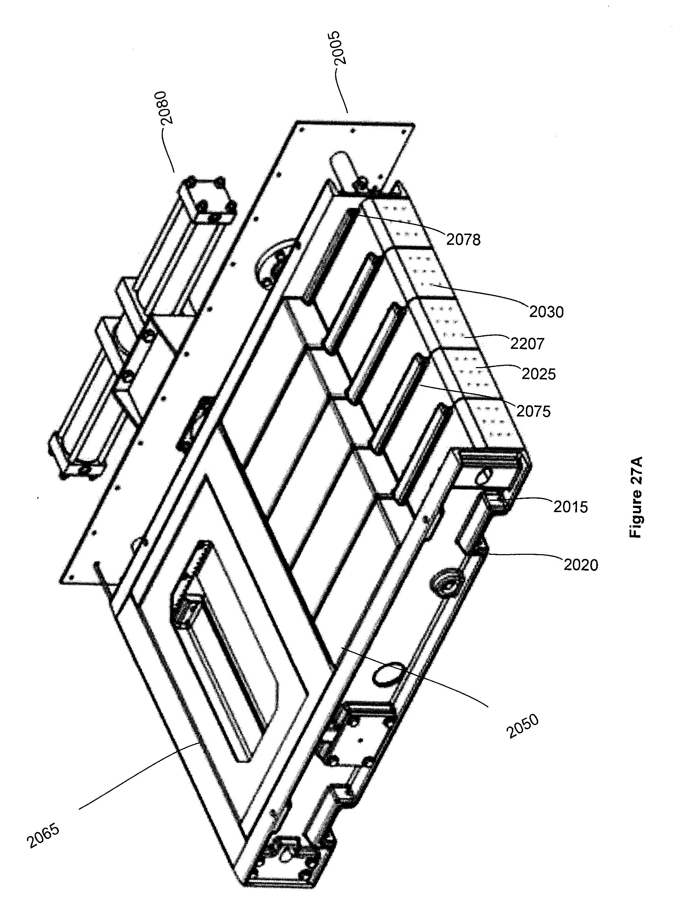

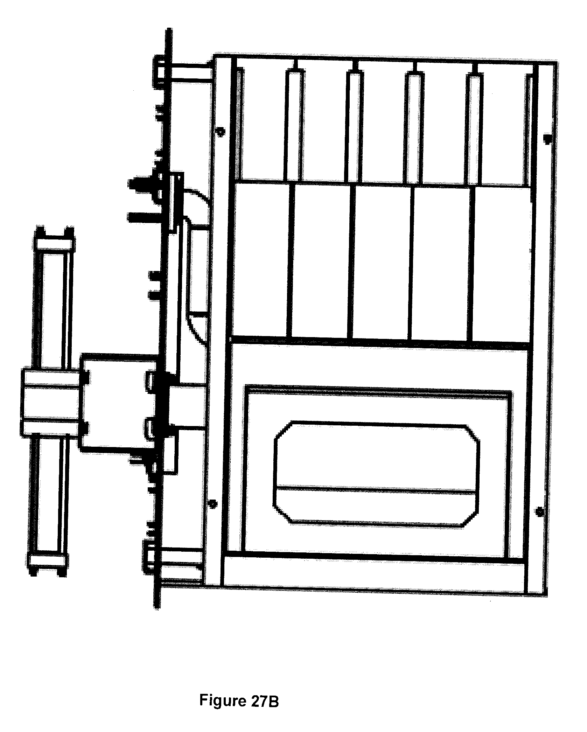

The cartridge structure is generally as described above. Briefly, referring to Figure 27, each cartridge includes a cartridge framework (2010) and connection plate (2005) specifically configured for sealing connection to the shell of the incinerator. Air enters the incinerator through air holes (2030) or nozzles in the face plate (2207) of each air box (2025). Air supply is to the individual air boxes as described above.

The lateral transfer components of the cartridge include a multiple-finger carrier ram (2050), engagement elements and drive system and are as described above.

## Claims

1. A module for use with a modular lateral transfer system of a processing chamber, wherein the module is configured as a multi-functional cartridge (1000, 2000) configured for insertion into a processing chamber wall of the processing chamber, the module comprising:
a module lateral transfer system (1015) configured to move a reactant material from a first location to a second location, wherein the lateral transfer system comprises one or more moving elements and one or more driving elements;
one or more module process gas supply systems (1020) configured to provide one or more process gases to interact with the reactant material; and
a module support system configured to support both the module lateral transfer system and the one or more module process gas supply systems;
wherein the module configured as a cartridge further comprises a multi-piece cartridge framework (2010) that provides the structure of the cartridge and support for components therein, a connection plate (2005) configured to attack the cartridge to the processing chamber wall, alignment guides (2015) configured to facilitate the correct insertion of the cartridge into the processing chamber wall, and installation notches (2020) configured to allow for the insertion of tools to facilitate the insertion and removal of the cartridge.

2. The module of claim 1, wherein refractory is provided between the structure of the module and the connection plate (2005).

3. The module of any one of claims 1 or 2, wherein each of the one or more module process gas supply systems (1020) comprises air boxes (2025), manifolds (2035) and piping (2040) as necessary.

4. The module of claim 3, wherein the module comprises multiple air boxes (2025), wherein the individual air boxes (2025) are configured to allow air to be supplied thereto via a single air manifold (2035) connected to an air pipe (2040) which connects to a hot air hook up flange (2045) in the connection plate (2005).

5. The module of any one of claims 1 to 4, wherein the one or more moving elements include a shelf, platform, ram, plow, screw, carrier ram, conveyor, belt or toothed wheel.

6. The module of claim 5, wherein the ram is a multi-finger ram (2050).

7. The module of any one of claims 1 to 6 further comprising one or more cooling means, the one or more cooling means optionally operatively associated with one or more sensing and/or response elements.

8. The module of any one of claims 1 to 7, wherein each module process gas system comprises a delivery system configured to provide a distributed supply of air and/or one or more process additives and includes a supply surface which is perforated or comprises a series of holes.

9. The module of any one of claims 1 to 8, wherein the module lateral transfer system comprises at least one hydraulic piston (2080).

10. The module of any one of claims 1 to 9, wherein the module includes a system for the connection of cartridge components to components of the processing chamber.

11. The module of any one of claim 1 to 10, wherein the one or more drive elements include a chain drive, sprocket drives, or a rack and pinion drive.

12. A horizontally oriented processing chamber including a plurality of modules according to any one of claims 1 to 11, wherein the plurality of modules form a modular lateral transfer system within the horizontally oriented processing chamber.

13. The horizontally oriented processing chamber of claim 12, wherein the horizontally oriented processing chamber is a furnace, gasifier, incinerator, dryer, pyrolyzer, high temperature conveyor system, or dry distillation apparatus.

14. The horizontally oriented processing chamber of claim 12 or 13, wherein the horizontally oriented processing chamber comprises one or more insertion locations for positioning of the module, wherein associated with each of the one or more insertion locations is a respective operative coupling system configured to provide the module with operative connection to one or more systems and/or supplies that enable the module to function.

15. The horizontally oriented processing chamber of claim 14, wherein the respective operative coupling system associated with each of the one or more insertion locations is configured such that there is a substantially automatic alignment of the module with one or more of power or process gas supplies upon insertion of the module.

## Patentansprüche

1. Modul zur Verwendung mit einem modularen lateralen Transportsystem einer Prozesskammer, worin das Modul als multifunktionale Kartusche (1000, 2000) konfiguriert ist, welche konfiguriert ist, um in eine Prozesskammerwand der Prozesskammer eingeführt zu werden, wobei das Modul Folgendes umfasst:
ein laterales Modultransportsystem (1015), welches konfiguriert ist, um ein reaktives Material von einer ersten Stelle an eine zweite Stelle zu bewegen, worin das laterale Transportsystem ein oder mehrere sich bewegende Elemente sowie ein oder mehrere Antriebselemente umfasst;
ein oder mehrere Modul-Prozessgas-Zufuhrsysteme (1020), welche konfiguriert sind, um ein oder mehrere Prozessgase bereitzustellen, um mit dem reaktiven Material wechselzuwirken; und
ein Modul-Stützsystem, welches konfiguriert ist, um sowohl das laterale Modul-Transportsystem als auch das eine oder die mehreren Modul-Prozessgas-Zufuhrsysteme zu stützen;
worin das als Kartusche konfigurierte Modul ferner ein mehrteiliges Kartuschengerüst (2010), welches die Struktur der Kartusche und eine Stützung für Komponenten darin bereitstellt, eine Verbindungsplatte (2005), die konfiguriert ist, um die Kartusche an der Prozesskammerwand zu befestigen, Ausrichtungsführungen (2015), welche konfiguriert sind, um die korrekte Einführung der Kartusche in die Prozesskammerwand zu erleichtern, sowie Installationsaussparungen (2020) umfasst, welche konfiguriert sind, um die Einführung von Werkzeugen zu ermöglichen, um die Einführung und Entfernung der Kartusche zu erleichtern.

2. Modul nach Anspruch 1, worin ein feuerfestes Material zwischen der Struktur des Moduls und der Verbindungsplatte (2005) bereitgestellt ist.

3. Modul nach einem der Ansprüche 1 oder 2, worin jedes aus dem einen oder mehreren Modul-Prozessgas-Zufuhrsystemen (1020) je nach Bedarf Luftkästen (2025), Verteiler (2035) und Rohrleitungen (2040) umfasst.

4. Modul nach Anspruch 3, worin das Modul mehrere Luftkästen (2025) umfasst, worin die einzelnen Luftkästen (2025) konfiguriert sind, um zu ermöglichen, dass diesen über einen einzigen Luftverteiler (2035), welcher mit einem Luftrohr (2040) verbunden ist, welches mit einem Heißluft-Anschlussflansch (2045) in der Verbindungsplatte (2005) verbunden ist, Luft zugeführt wird.

5. Modul nach einem der Ansprüche 1 bis 4, worin das eine oder mehrere sich bewegenden Elemente ein Bord, eine Plattform, einen Druckkolben, einen Tragdorn, eine Schraube, einen Spindelschlitten, ein Förderband, einen Gurt oder ein Zahnrad umfassen.

6. Modul nach Anspruch 5, worin der Druckkolben ein Mehrfach-Druckkolben (2050) ist.

7. Modul nach einem der Ansprüche 1 bis 6, welches ferner ein oder mehrere Kühlmittel umfasst, wobei das eine oder mehrere Kühlmittel gegebenenfalls mit einem oder mehreren Abfühl- und/oder Antwortelementen wirkverbunden sind.

8. Modul nach einem der Ansprüche 1 bis 7, worin jedes Modul-Prozessgas-System ein Abgabesystem umfasst, welches konfiguriert ist, um eine verteilte Zufuhr von Luft und/oder mehreren Prozess-Zusatzstoffen bereitzustellen und eine Zufuhroberfläche umfasst, die perforiert ist oder eine Reihe von Löchern umfasst.

9. Modul nach einem der Ansprüche 1 bis 8, worin das laterale Modul-Transportsystem zumindest einen hydraulischen Kolben (2080) umfasst.

10. Modul nach einem der Ansprüche 1 bis 9, worin das Modul ein System zur Verbindung von Kartuschenelementen mit Komponenten der Prozesskammer umfasst.

11. Modul nach einem der Ansprüche 1 bis 10, worin das eine oder mehrere Antriebselemente einen Kettenantrieb, Zahnradantriebe oder einen Zahnstangenantrieb umfasst.

12. Horizontal orientierte Prozesskammer, welche eine Vielzahl von Modulen nach einem der Ansprüche 1 bis 11 umfasst, worin die Vielzahl von Modulen ein modulares laterales Transportsystem innerhalb der horizontal orientierten Prozesskammer bilden.

13. Horizontal orientierte Prozesskammer nach Anspruch 12, worin die horizontal orientierte Prozesskammer ein Ofen, Vergaser, eine Brennkammer, eine Trockenmaschine, eine Pyrolysevorrichtung, ein Hochtemperatur-Fördersystem oder eine Trockendestillationsvorrichtung ist.

14. Horizontal orientierte Prozesskammer nach Anspruch 12 oder 13, worin die horizontal orientierte Prozesskammer eine oder mehrere Einführungsstellen umfasst, um das Modul zu positionieren, worin jeder der einen oder mehreren Einführungsstellen ein jeweiliges Wirkkopplungssystem zugeordnet ist, welches konfiguriert ist, um dem Modul eine Wirkverbindung mit einem oder mehreren Systemen und/oder Zufuhrvorrichtungen bereitzustellen, die es dem Modul ermöglichen, zu funktionieren.

15. Horizontal orientierte Prozesskammer nach Anspruch 14, worin das jeweilige Wirkkopplungssystem, das jeder aus der einen oder mehreren Einführungsstellen zugeordnet ist, so konfiguriert ist, dass bei Einführung des Moduls eine im Wesentlichen automatische fluchtende Ausrichtung des Moduls auf eine oder mehrere Leistungs- oder Prozessgaszufuhrvorrichtungen erfolgt.

## Revendications

1. Module destiné à être utilisé avec un système de transfert latéral modulaire d'une chambre de traitement, dans lequel le module est configuré comme une cartouche multifonction (1000, 2000) configurée pour l'insertion dans une paroi de chambre de traitement de la chambre de traitement, le module comprenant :
un système de transfert latéral modulaire (1015) configuré pour déplacer un matériau réactif d'un premier emplacement à un second emplacement, dans lequel le système de transfert latéral comprend un ou plusieurs éléments mobiles et un ou plusieurs éléments d'entraînement ;
un ou plusieurs systèmes d'alimentation en gaz de traitement de module (1020) configurés pour fournir un ou plusieurs gaz de traitement afin d'interagir avec le matériau réactif ; et
un système de support de module configuré pour supporter à la fois le système de transfert latéral modulaire et les un ou plusieurs systèmes d'alimentation en gaz de traitement de module ;
dans lequel le module configuré comme une cartouche comprend en outre un bâti de cartouche à plusieurs pièces (2010) qui fournit la structure de la cartouche et le support pour les composants à l'intérieur de cette dernière, une plaque de raccordement (2005) configurée pour fixer la cartouche sur la paroi de chambre de traitement, des guides d'alignement (2015) configurés pour faciliter la bonne insertion de la cartouche dans la paroi de chambre de traitement et des encoches d'installation (2020) configurées pour permettre l'insertion des outils pour faciliter l'insertion et le retrait de la cartouche.

2. Module selon la revendication 1, dans lequel le réfractaire est prévu entre la structure du module et la plaque de raccordement (2005).

3. Module selon l'une quelconque des revendications 1 ou 2, dans lequel chacun des un ou plusieurs systèmes d'alimentation en gaz de traitement de module (1020) comprend des boîtes à vent (2025), des collecteurs (2035) et des tuyaux (2040), si nécessaire.

4. Module selon la revendication 3, dans lequel le module comprend plusieurs boîtes à vent (2025), dans lequel les boîtes à vent (2025) individuelles sont configurées pour permettre à l'air d'être amené à ces dernières via un simple collecteur d'air (2035) raccordé à un tuyau d'air (2040) qui raccorde une bride de raccordement d'air chaud (2045) dans la plaque de raccordement (2005).

5. Module selon l'une quelconque des revendications 1 à 4, dans lequel les un ou plusieurs éléments mobiles comprennent une étagère, une plateforme, un vérin, un déflecteur, une vis, un vérin de support, un transporteur, une courroie ou une roue dentée.

6. Module selon la revendication 5, dans lequel le vérin est un vérin à plusieurs doigts (2050).

7. Module selon l'une quelconque des revendications 1 à 6, comprenant en outre un ou plusieurs moyens de refroidissement, les un ou plusieurs moyens de refroidissement étant facultativement associés de manière opérationnelle avec les un ou plusieurs éléments de détection et/ou sensibles.

8. Module selon l'une quelconque des revendications 1 à 7, dans lequel chaque système de gaz de traitement de module comprend un système de distribution configuré pour fournir une alimentation distribuée d'air et/ou un ou plusieurs additifs de traitement et comprend une surface d'alimentation qui est perforée ou comprend une série de trous.

9. Module selon l'une quelconque des revendications 1 à 8, dans lequel le système de transfert latéral de module comprend au moins un piston hydraulique (2080).

10. Module selon l'une quelconque des revendications 1 à 9, dans lequel le module comprend un système pour le raccordement des composants de cartouche aux composants de la chambre de traitement.

11. Module selon l'une quelconque des revendications 1 à 10, dans lequel les un ou plusieurs éléments d'entraînement comprennent un entraînement à chaîne, des entraînements à pignon ou un entraînement à crémaillère.

12. Chambre de traitement orientée horizontalement comprenant une pluralité de modules selon l'une quelconque des revendications 1 à 11, dans lequel la pluralité de modules forme un système de transfert latéral modulaire à l'intérieur de la chambre de traitement orientée horizontalement.

13. Chambre de traitement orientée horizontalement selon la revendication 12, dans laquelle la chambre de traitement orientée horizontalement est un four, un gazogène, un incinérateur, un dispositif de séchage, un pyrolyseur, un système transporteur à haute température ou un appareil de distillation sèche.

14. Chambre de traitement orientée horizontalement selon la revendication 12 ou 13, dans laquelle la chambre de traitement orientée horizontalement comprend un ou plusieurs emplacements d'insertion pour le positionnement du module, dans laquelle, associé à chacun des un ou plusieurs emplacements d'insertion, on trouve un système de couplage opérationnel respectif configuré pour doter le module du raccordement opérationnel aux un ou plusieurs systèmes et/ou alimentations qui permettent au module de fonctionner.

15. Chambre de traitement orientée horizontalement selon la revendication 14, dans laquelle le système de couplage opérationnel respectif associé à chacun des un ou plusieurs emplacements d'insertion est configuré de sorte qu'il y a un alignement sensiblement automatique du module avec une ou plusieurs alimentations de puissance ou de gaz de traitement suite à l'insertion du module.
